# EUROPÄISCHE PATENTSCHRIFT

(11) **EP 0 722 595 B1**
(45) Veröffentlichungstag und Bekanntmachung des Hinweises auf die Patenterteilung: **06.08.1997**
(21) Anmeldenummer: 94928268.5
(22) Anmeldetag: 28.09.1994
(51) Int. Cl.: G06K 7/00, G06K 7/08

(54) **TRANSPONDER MIT AGC-REGELUNG**
TRANSPONDER WITH AUTOMATIC GAIN CONTROL
TRANSPONDEUR A REGULATION AUTOMATIQUE DE GAIN

(30) Priorität: 05.10.1993 DE 4333964
(43) Veröffentlichungstag der Anmeldung: 24.07.1996
(73) Patentinhaber: ROBERT BOSCH GMBH, 70442 Stuttgart (DE)
(72) Erfinder: ROSSIUS, Hans-Ulrich, D-31177 Harsum (DE); OHLER, Michael, D-31035 Despetal (DE); BODE, Friedrich-Wilhelm, D-31552 Apelern (DE); VAHLE, Andreas, D-31141 Hildesheim (DE); FISCHER, Hans-Jürgen, D-31141 Hildesheim (DE)
(86) Internationale Anmeldenummer: DE9401141
(87) Internationale Veröffentlichungsnummer: WO9510096

(56) Entgegenhaltungen:
- FR-A- 2 598 006
- GB-A- 2 187 916
- PROCEEDINGS OF THE DRIVE CONFERENCE 4-6 FEB 1991, BRUSSELS Seiten 248 - 268 BLYTHE,P.P. ET AL. 'A SHORT-RANGE ROAD TO VEHICLE MICROWAVE COMMUNICATIONS LINK FOR AUTOMATIC DEBITING AND OTHER RTI SERVICES' in der Anmeldung erwähnt

## Beschreibung

### Stand der Technik

Die Erfindung geht aus von einem Transponder vorzugsweise zur bidirektionalen Datenübertragung zu einer als Bake ausgebildeten Feststation nach der Gattung des Hauptanspruchs. Aus der Veröffentlichung 'Proceedings of the DRIVE Konferenz, 4. bis 6. Februar 1991, "Advanced telematics in road transport" (Seite 248-268) ist schon ein Transponder zur bidirektionalen Datenübertragung zwischen einem Kraftfahrzeug (OBU) und einer Feststation (Bake) bekannt, die nach dem semipassiven Transponderverfahren arbeitet. Dabei tritt das Problem auf, daß der Empfangsbereich der Bake beispielsweise nicht genau genug auf eine einzelne Fahrbahnspur begrenzt werden kann, so daß bei der Anwendung für eine automatische Gebührenerfassung es vorkommen kann, daß auch ein auf einer Nachbarspur fahrendes Fahrzeug mit seiner OBU die Kommunikation des unter der Antenne fahrenden Fahrzeugs zu stark stört, so daß es zu keiner ordnungsgemäßen Abbuchung der Gebühr kommt.

Der erfindungsgemäße Transponder mit dem kennzeichnenden Merkmal des Hauptanspruchs hat demgegenüber den Vorteil, daß durch die automatische Regelung des an die Bake zurückgesandten Signales die Dämpfung des Signales derart ausgebildet ist, daß nur ein streng begrenzter Bereich für den bei der Bake ankommenden Signalpegel vorgesehen ist. Die Dämpfung wird dabei so geregelt, daß sowohl die Dämpfung des Signals von der Bake zum Fahrzeug als auch in umgekehrter Richtung ausgeglichen wird und dadurch Störmöglichkeiten aus benachbarten Fahrbahnbereichen ausgeblendet werden. In der Nachbarfahrspur befindliche OBUs werden aufgrund ihres höheren Nutzsignalpegels aus der zugehörigen Antenne entsprechend abgeregelt und können nicht mehr stören.

Durch die in den abhängigen Ansprüchen ausgeführten Maßnahmen sind vorteilhafte Weiterbildungen und Verbesserungen des im Hauptanspruch angegebenen Transponders möglich. Besonders vorteilhaft ist, daß das Downlink-Signal von einer ersten automatisch regelbaren Verstärkerstufe (automatic gaim control, AGC) geregelt wird. Dadurch erfolgt eine erste Messung des empfangenen Pegels. Beispielsweise kann der Pegel durch Verschmutzung der Scheibe oder anderer Einflüsse unterschiedlich sein. Durch die Messung des Pegels wird in bezug auf einen Sollwert eine Regelgröße gefunden, die für die automatische Regelung zugrundegelegt wird.

Vorteilhaft ist weiter, daß die in der ersten Messung gefundene Größe zur Steuerung einer weiteren Verstärkerstufe zugeführt wird, die das UPLINK-Signal mit dem gleichen Faktor verstärkt oder dämpft und an dann die Bake zurücksendet.

Für die Praxis ergibt sich bei der Zuordnung des Empfangbereiches einer Bake zu einer Fahrbahn der Vorteil, daß jeweils nur ein Fahrzeug von der Bake erfaßt wird. Dadurch kann bei Anordnung des Transponders an einem Kraftfahrzeug ein einzelnes Fahrzeug erfaßt werden. Dieses ist besonders für die automatische Abbuchung von Straßenbenutzungsgebühren oder Prüfung von Zugangsberechtigungen vorteilhaft.

### Zeichnung

Ein Ausführungsbeispiel der Erfindung ist in der Zeichnung dargestellt und in der nachfolgenden Beschreibung näher erläutert. Es zeigen Figur 1 schematisch den Sendebetrieb im DOWNLINK, Figur 2 den Sendebetrieb im UPLINK, Figur 3 zeigt ein Blockschaltbild und Figur 4 zeigt eine Anordnung an Fahrbahnen.

### Beschreibung des Ausführungsbeispiels

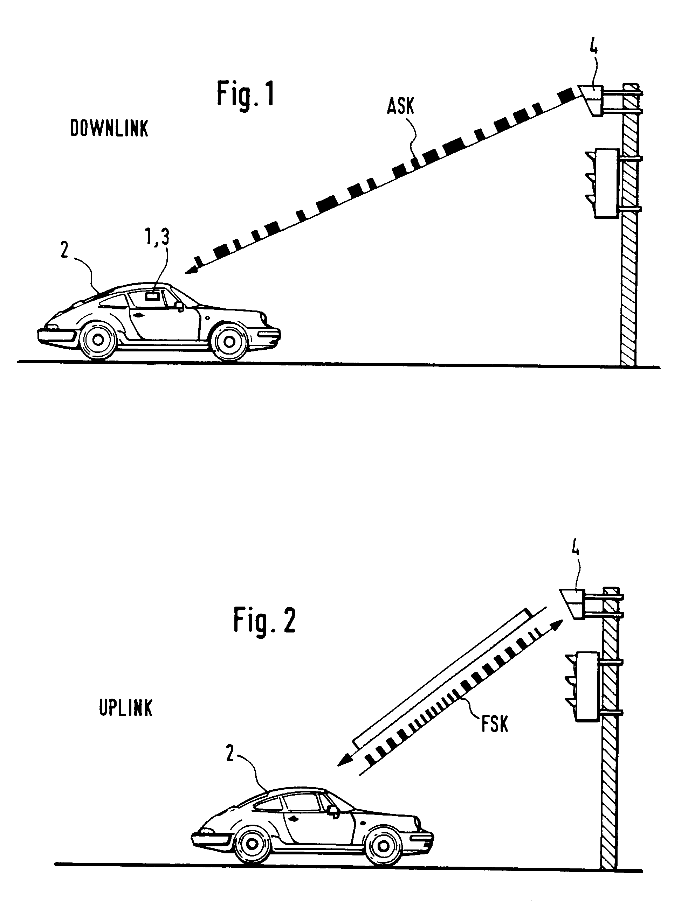

Figur 1 zeigt ein Kraftfahrzeug 2, das für die digitale Kommunikation mit einer Bake 4 mit einer 'on board unit' (OBU) ausgerüstet ist. Die OBU 1 arbeitet als Transponder 3 und empfängt im DOWNLINK die amplitudenmodulierten Signale ASK der Bake 4. Der Transponder 3 wie auch die Bake 4 sind aus der zuvor genannten Veröffentlichung bekannt und müssen daher nicht näher erläutert werden. Zum Empfang oder Senden der Datensignale hat der Transponder 3 eine Empfangs- und zum Senden eine Sendeantenne 1. Die Antennen 1 sind bei Verwendung von Mikrowellen Bestandteil des Transponders.

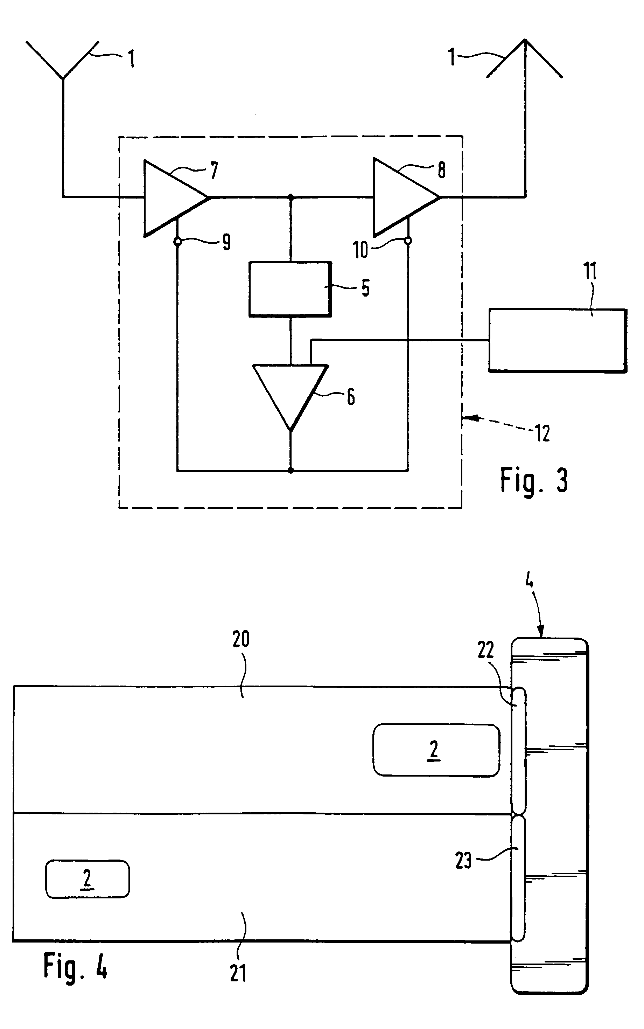

Figur 2 zeigt die digitale Kommunikation im UPLINK, wobei der Transponder 3 aus dem nicht modulierten Signal der Bake 4 sich zunächst seine Netzspannung bildet und dann seine zu übertragenden Daten in FSK-Modulation (Frequency shift keying) an die Bake 4 überträgt. Bei dem passiven, per se bekannten Transponderverfahren ergibt sich der Nachteil, daß die UPLINK-Sendeenergie abhängig ist von der Dämpfung auf dem Übertragungsweg. Dieses wird anhand des Beispiels der Figur 4 näher erläutert. In Figur 4 sind zwei Fahrbahnen 20, 21 dargestellt, auf denen ein erstes Kraftfahrzeug 2 bzw. ein zweites Kraftfahrzeug 2 fährt. Quer über den Fahrbahnen ist auf einer Schilderbrücke eine Bake 4 mit Antennen 22, 23 angeordnet. Die Antennen sind so angeordnet, daß sie den gekennzeichneten Fahrbahnbereich 20 bzw. 21 erfassen können. Es ist nun so, daß die Antenne 22 auch den Fahrbahnbereich 21 und umgekehrt die Antenne 23 den Fahrbahnbereich 20 erfaßt, wenn auch mit erheblich niedrigerem Antennengewinn. Des weiteren ergibt sich das Problem, daß die Streckendämpfung zwischen Bake 4 und dem Transponder 3 von verschiedenen Faktoren abhängig ist. Beispielsweise befindet sich das erste Kraftfahrzeug nahe an der Antenne 22 und das zweite Kraftfahrzeug weiter von der Antenne 23 entfernt. Es kann vorkommen, daß das erste Kraftfahrzeug als Lastkraftwagen hoch gebaut ist und das zweite Kraftfahrzeug als Personenwagen niedrig gebaut ist. Auch hat das erste Kraftfahrzeug eine saubere Scheibe, hinter der sich der Transponder 3 befindet, während das zweite Kraftfahrzeug verschmutzte Scheiben hat. Aus diesen Faktoren ergibt sich, daß die Streckendämpfung zwischen der Bake 4 und dem ersten Fahrzeug 2 erheblich niedriger ist als beim zweiten Fahrzeug. Aufgrund der niedrigen Streckendämpfung des ersten Kraftfahrzeugs 2 kann auch die Antenne 3 dessen Signale empfangen.

Um diese Mängel zu beseitigen, wird erfindungsgemäß vorgeschlagen, entsprechend der Figur 3 Mittel für eine Verstärkungsregelung 12 (Automatic gain control, AGC) zwischen die Empfangs- und Sendeantenne 1 einzufügen. Eine erste Verbesserung der Regelung wird bereits erzielt, wenn man das Ausgangssignal des Transponders 3 mit Hilfe einer ersten, automatischen Verstärkungsregelung 7 konstant hält. Dieses konstant gehaltene Signal mit einem vorgegebenen Ausgangspegel kann dann an die Bake 4 zurückgesendet werden.

Eine noch verbesserte Kontrolle des Ausgangssignals erhält man, wenn man entsprechend der Figur 3 der ersten Verstärkerstufe 7 eine zweite Verstärkerstufe 8 nachschaltet und deren Ausgang mit der Sendeantenne 1 verbindet. Die Verstärkerregelung 12 hat zu diesem Zweck einen Detektor 5, der die Amplitude der ersten Verstärkerstufe 7 erfaßt. Dieses Signal wird in einen Regelverstärker 6 gegeben, der seinen Referenzwert einem Sollwertgeber 11 entnimmt. Der Sollwertgeber 11 ist als Speicher ausgebildet. Der Regelverstärker 6 regelt nun aufgrund der vorgegebenen Sollwerte und des Detektorsignals seine Ausgangsverstärkung automatisch und gibt einen entsprechenden Regelwert in entsprechende Steuereingänge 9, 10 der ersten und zweiten Verstärkerstufe.

Der Vorteil dieses Regelverfahrens besteht darin, daß nur an der ersten Verstärkerstufe eine Verstärkungsmessung erforderlich ist, die mit dem Detektor 5 leicht durchführbar ist.

Als Detektor 5 eignet sich eine entsprechende Diodenschaltung. Als Regelverstärker 6 können Halbleiterregler verwendet werden, die marktüblich sind. Die erste und zweite Verstärkerstufe 7, 8 sollen jedoch eine möglichst übereinstimmende Regelcharakteristik aufweisen. Durch diese doppelte Verstärkungsregelung wird bewirkt, daß das Ausgangssignal des Transponders 3 an die Bake 4 auch die Dämpfungsschwankungen des UPLINKs ausgleicht. Durch die doppelte Verstärkungsregelung des Transponders 3 werden so die Streckendämpfungen des DOWN- und UPLINKs ausgeglichen. Das führt schließlich dazu, daß ein Fahrzeug auf einer benachbarten Fahrspur, die weiter entfernt ist als die eigene Fahrspur, nicht mehr stören kann. Die Abbuchung einer Benutzungsgebühr kann daher störungsfrei für die gewünschte Fahrspur durchgeführt werden und ist damit zuverlässig.

## Patentansprüche

1. Transponder, vorzugsweise zur bidirektionalen Datenübertragung zu einer als Bake ausgebildeten Feststation nach dem passiven Transponderverfahren, mit einer Empfangs- und Sendeantenne, mit einer Steuerschaltung und mit einem Datenspeicher, dadurch gekennzeichnet, daß zwischen der Empfangs- und der Sendeantenne (1) zwei in Serie geschaltete regelbare Verstärkerstufen (7,8) schalt bar sind, daß die Verstärkung der ersten Verstärkerstufe (7) auf der Basis eines Vergleichs seines Ausgangssignals mit einem Sollwert geregelt wird und daß der entsprechende Regelwert auch der zweiten Verstärkerstufe (8) eingebbar ist.

2. Transponder nach Anspruch 1, dadurch gekennzeichnet, daß die erste und zweite Verstärkerstufe (7, 8) eine etwa übereinstimmende Regelcharakteristik aufweisen.

3. Transponder nach einem der vorhergehenden Ansprüche, dadurch gekennzeichnet, daß beide Verstärkerstufen (7, 8) über ihren Steuereingang (9, 10) von einem Sollwertgeber (11) steuerbar sind, dessen Sollwert in einem Speicher (11) abgelegt sind.

4. Transponder nach einem der vorhergehenden Ansprüche, dadurch gekennzeichnet, daß die Verstärkerstufen (7, 8) in ihrer Dämpfung derart regelbar sind, daß die Streckendämpfung des Ausgangssignals des Transponders (3) in Abhängigkeit von der Amplitude am Eingang der ersten Verstärkerstufe (7) vorzugsweise quadratisch zunimmt.

5. Transponder nach einem der vorhergehenden Ansprüche, dadurch gekennzeichnet, daß der Transponder (3) an einem Kraftfahrzeug (1) angeordnet ist.

6. Transponder nach einem der vorhergehenden Ansprüche, dadurch gekennzeichnet, daß der Transponder (3) zur Gebührenabrechnung verwendbar ist.

7. Transponder nach einem der vorhergehenden Ansprüche, dadurch gekennzeichnet, daß der Transponder (3) für Anwendungen der Verkehrsleittechnik verwendbar ist.

## Claims

1. Transponder, preferably for bidirectional transmission of data to a fixed station which is constructed as a beacon, according to the passive transponder method, having a receiving and transmitting antenna, having a control circuit and having a data memory, characterized in that, between the receiving antenna and the transmitting antenna (1), two controllable amplifier stages (7, 8) which are connected in series can be connected, in that the amplification of the first amplifier stage (7) is controlled on the basis of a comparison of its output signal with a desired value, and in that the corresponding control value can also be entered into the second amplifier stage (8).

2. Transponder according to Claim 1, characterized in that the first and second amplifier stages (7, 8) have an approximately corresponding control characteristic.

3. Transponder according to one of the preceding claims, characterized in that both amplifier stages (7, 8) can be controlled via their control input (9, 10) by a desired-value signal transmitter (11) whose desired values are stored in a memory (11).

4. Transponder according to one of the preceding claims, characterized in that the attenuation of the amplifier stages (7, 8) can be controlled in such a way that the path attenuation of the output signal of the transponder (3) increases, preferably quadratically as a function of the amplitude at the input of the first amplifier stage (7).

5. Transponder according to one of the preceding claims, characterized in that the transponder (3) is arranged on a motor vehicle (1).

6. Transponder according to one of the preceding claims, characterized in that the transponder (3) can be used for charging fees.

7. Transponder according to one of the preceding claims, characterized in that the transponder (3) can be used for applications of traffic control technology.

## Revendications

1. Transpondeur de préférence pour la transmission bidirectionnelle de données vers un poste fixe en forme de balise, selon le procédé de transpondage passif, comprenant une antenne de réception et une antenne d'émission, un circuit de commande et une mémoire de données,
caractérisé en ce qu'
entre l'antenne de réception et l'antenne d'émission (1), il y a deux étages d'amplification (7, 8) réglables, branchés en série, et l'amplification du premier étage d'amplification (7) est régulée à partir de la comparaison de son signal de sortie avec une valeur de consigne, la valeur de régulation correspondante étant également fournie au second étage d'amplification (8).

2. Transpondeur selon la revendication 1,
caractérisé en ce que,
le premier et le second étage d'amplification (7, 8) ont des caractéristiques de régulation qui se correspondent sensiblement.

3. Transpondeur selon l'une des revendications précédentes,
caractérisé en ce que
les deux étages d'amplification (7, 8) sont commandés par un générateur de valeurs de consigne (11) relié à leur entrée de commande (9, 10), générateur dont la valeur de consigne est enregistrée dans une mémoire (11).

4. Transpondeur selon l'une des revendications précédentes,
caractérisé en ce que les étages d'amplification(7, 8) ont un amortissement réglable de façon que l'amortissement du chemin du signal de sortie du transpondeur (3) augmente en fonction de l'amplitude à l'entrée du premier étage
d'amplification (7), de préférence suivant une fonction quadratique.

5. Transpondeur selon l'une des revendications précédentes,
caractérisé en ce que
le transpondeur (3) équipe un véhicule automobile (1).

6. Transpondeur selon l'une des revendications précédentes,
caractérisé en ce que
le transpondeur (3) est appliqué à la gestion de péages.

7. Transpondeur selon l'une des revendications précédentes,
caractérisé en ce que
le transpondeur (3) est appliqué à la gestion du trafic.
